# EUROPÄISCHE PATENTSCHRIFT

(11) **EP 1 286 802 B1**
(45) Veröffentlichungstag und Bekanntmachung des Hinweises auf die Patenterteilung: **03.10.2007**
(21) Anmeldenummer: 01955206.6
(22) Anmeldetag: 06.06.2001
(51) Int. Cl.: B23C 5/08, B23C 3/06

(54) **SCHEIBENFRÄSER**
SIDE-MILLING CUTTER
FRAISE TROIS TAILLES

(30) Priorität: 08.06.2000 DE 10027945
(43) Veröffentlichungstag der Anmeldung: 05.03.2003
(73) Patentinhaber: Widia GmbH, 45145 Essen (DE)
(72) Erfinder: GESELL, Reinold, 91629 Weihenzell (DE); BÄR, Jürgen, 90765 Fürth (DE)
(74) Vertreter: Vomberg, Friedhelm
(86) Internationale Anmeldenummer: PCT/DE2001/002121
(87) Internationale Veröffentlichungsnummer: WO 2001/094065

(56) Entgegenhaltungen:
- DE-A- 19 743 971

## Beschreibung

Die Erfindung betrifft einen Scheibenfräser zur spanenden Bearbeitung von zylindrischen Konturen an einem Werkstück, insbesondere von exzentrisch angeordneten zylindrischen Konturen an einem um eine Längsachse drehbaren Werkstück wie einer Kurbelwelle, mit mehreren peripher an einem scheibenförmigen Werkzeugträger unter einem axialen Neigungswinkel gekippt angeordneten Schneideinsätzen, von denen ein Teil zur Wangen- und ggf. zur Unterstichbearbeitung radial und der andere Teil zur Zapfenaußendurchmesserbearbeitung tangential am Werkzeugträger eingespannt ist (siehe z.B. DE-A-197 43 971).

In der WO 96/39269 wird ein Verfahren zur spanabhebenden Bearbeitung von zylindrischen Korrekturen sowie eine Vorrichtung zur Durchführung dieses Verfahrens beschrieben. Das betreffende Verfahren verwendet die sogenannte Schnitteilung an, bei der die Herstellung der Fertigkontur, die als solche bereits Endmaße aufweist oder noch ein Aufmaß, das durch Schleifen oder Schlichten abgetragen werden kann, mit Werkzeugen durchgeführt wird, die mit Schneideinsätzen bestückt nacheinander oder auch gleichzeitig mit dem Werkstück in Eingriff gebracht werden. Bei einer Kurbelwelle wird so die Bearbeitung der Wangen und die Bearbeitung des Unterstiches und des Zapfens einer Kurbelwelle oder die Herstellung einer halben Kurbelwellen-Wangenkontur mit einem Unterstich oder einem Durchmesseranteil mit einem ersten Werkzeug und die Herstellung eines zweiten Unterstiches und des restlichen Durchmesseranteiles mit einem zweiten Werkzeug aufgeteilt. Diese Aufteilung ermöglicht die Variation der Lagerbreite in bestimmten Grenzen. Bevorzugt wird bei der Bearbeitung das sogenannte Hochgeschwindigkeitsfräsen angewendet, bei dem das Werkzeug mit konstanter hoher oder variabler Drehzahl angetrieben wird. Beim Hochgeschwindigkeitsfräsen werden Schnittgeschwindigkeiten von mehr als 160 m/min verwendet. Die Spanungsdicken liegen im Bereich von 0,05 bis 0,1 mm. Die Schnittbogenlänge, d.h. die mit den entsprechenden Schneideinsätzen in Eingriff befindliche Länge des Werkzeugträgers in bezug auf seinen Gesamtumfang, wird möglichst gering gewählt. Mit diesen Maßnahmen können so gute Oberflächenqualitäten erzeugt werden, daß das Vorschleifen oder zusätzliche Vorbehandeln vor der Wärmebehandlung als zusätzlicher Arbeitsvorgang vollständig entfallen kann. Bei dem in der WO 96/39269 beschriebenen Verfahren wird vorgeschlagen, auf unterschiedlichen Werkzeugen Wendeschneidplatten zur Wangenbearbeitung einerseits bzw. zur Zapfenbearbeitung und für den Unterstich andererseits anzubringen. Alle verwendeten Schneideinsätze sollen einen positiven Spanwinkel aufweisen, wobei die Schneideinsatzeinstellung zum Werkstück dergestalt vorgenommen wird, daß der effektive Spanwinkel zwischen - 5° und + 15°, vorzugsweise - 5° bis + 5°, und/oder ein positiver axialer Spanwinkel (Rückspanwinkel) bis zu 10° gewählt wird.

In einem dort gewählten speziellen Ausführungsbeispiel befinden sich auf einem Scheibenfräser zwei Sorten von Schneidplatten, von denen die erste Sorte radial und die zweite tangential am Werkzeugträger bzw. in dortigen Werkzeugaufnahmen eingespannt ist

Besitzt ein Scheibenfräser auf seiner Zylindermantelfläche zwei nebeneinanderliegende Reihen von tangential eingespannten Schneidplatten, droht bei Fertigungsungenauigkeiten oder bei geteiltem Werkzeug durch Positionierungsungenauigkeiten der Bearbeitungsmaschine ein Höhenversatz, durch den im Überdeckungsbereich am bearbeiteten Werkstück ein unerwünschter scharfkantiger Absatz entsteht. Um diesen Überschnitt zu verhindern, wird in der WO 96/39269 ein Schneideinsatz vorgeschlagen, dessen Spanflächen im Bereich der eine Schneidecke bildenden Hauptschneidkante eine Abflachung oder Einziehung besitzen, die sich in dem Bereich beider benachbarter Hauptschneidkanten erstreckt. Solche Schneideinsätze ermöglichen die Fertigung sanfter Übergänge im Überdeckungsbereich, beispielsweise bei der Herstellung einer Zapfenoberfläche eines Kurbelwellenhubzapfens.

In der WO 96/39269 sind weiterhin radial eingespannte Schneideinsätze zur Fertigung eines Unterstiches einer Kurbelwelle dargestellt.

In der DE 197 39 300 A1 wird ein Schneideinsatz zum Schneiden von Profilen, insbesondere zum Fräsen von Profileinstichen in rotierend bewegte Werkstücke wie Kurbelwellen beschrieben. Dieser Schneideinsatz besitzt einen im wesentlichen kubischen Grundkörper mit mindestens zwei nutzbaren Schneidkanten, zwei parallel zueinander angeordnete, ebene und von einem Befestigungsloch durchdrungene Seitenflächen, zwei Grundflächen, die an ihren gegenüberliegenden Enden jeweils eine durch dem zu schneidenden Profil entsprechend bogenförmig ausgebildete Schneidkanten begrenzte Spanfläche aufweisen. Die zwischen zwei gegenüberliegenden Schneidkanten liegende Freifläche soll zumindest teilweise kreisförmig konkav ausgebildet sein. Durch die konkave Freiflächenausbildung wird eine Freiwinkelvergrößerung und ein zur Freiflächenmitte hin großer Freiraum geschaffen, womit gewünschte Kippungen dieses Schneideinsatzes relativ zum Werkstück ermöglicht werden.

Es ist Aufgabe der vorliegenden Erfindung, den eingangs genannten Scheibenfräser dahingehend weiterzuentwickeln, daß ein weicherer Schnitt beim Zerspanen gewährleistet ist.

Diese Aufgabe wird durch einen Scheibenfräser nach Anspruch 1 oder 3 gelöst.

Bei dem Scheibenfräser nach Anspruch 1, der zusätzlich die Aufgabe löst, daß auf dem vorhandenen Zylinderumfang des Scheibenfräsers eine möglichst große Anzahl von Schneidwerkzeugen angeordnet werden kann; sind die tangential eingespannten Schneideinsätze unter einem axialen Neigungswinkel von 25° ± 10°, vorzugsweise unter einem Neigungswinkel von 20° bis 30°, angeordnet. Entgegen der Fräserdrehrichtung betrachtet liegt die hinterste Schneidecke eines solchen Schneideinsatzes auf einer Geraden vertikal zur Drehrichtung des Scheibenfräsers, die von der vordersten Schneidkante des darauffolgenden radial eingespannten Schneideinsatzes einen Abstand von ≤ 5 mm, vorzugsweise ≤ 2 mm, bis hin zu negativen Werten aufweist.

Bei nach dem Stand der Technik bekannten Scheibenfräsern ist die Einstellung des Axialwinkel auf geringfügige Winkelmaße beschränkt worden, um den Platzbedarf der peripher tangential eingespannten, vorzugsweise mit quadratischer Spanfläche ausgestatteten Schneideinsätze möglichst gering zu halten, da eine Kippung um einen Axialwinkel den jeweiligen Abstand zum nächstfolgenden radial eingespannten Schneideinsatz unter Berücksichtigung der dort am Werkzeugträger noch vorzusehenden Spankammer vergrößert hätte. Mit der gewählten Axialwinkelneigung für die tangentialen Schneideinsätze ist es jedoch möglich, die jeweils hinterste Schneidecke des Schneideinsatzes nach innen zu verschwenken, so daß deren Abstand, gemessen mittels einer senkrecht zur Fräsrichtung liegenden Geraden, von der Schneidkante des nächstfolgenden radial eingespannten Schneideinsatzes auf vorzugsweise weniger als 2 mm bis hin zu negativen Werten minimiert werden kann. Unter negativen Abstandswerten sind solche Anordnungen der tangential eingespannten Schneideinsätze zu verstehen, bei denen die hinterste Schneidecke räumlich gesehen sogar hinter der Schneidkante des nächstfolgenden radialen Schneideinsatzes liegt. Mit der gewählten Anordnung ist es möglich, die Anzahl der nutzbaren Schneideinsätze auf dem Werkzeugträger zu vergrößern. Vorzugsweise besitzt der Scheibenfräser in Schnittrichtung betrachtet in alternierender Folge auf dem Zylindermantel des Werkzeugträgers jeweils tangential und radial eingespannte Schneideinsätze, oder anders ausgedrückt, jeweils an der Kante des Scheibenfräserzylinders radial eingespannte Schneideinsätze, denen jeweils (links wie rechts) ein tangential eingespannter Schneideinsatz räumlich vorgeordnet ist. Die hierdurch gebildeten zwei Reihen von tangential eingespannten Schneideinsätzen weisen Schneideinsätze auf, die je nach ihrer Reihenzugehörigkeit unter einem gegensinnigen Axialwinkel gekippt sind.

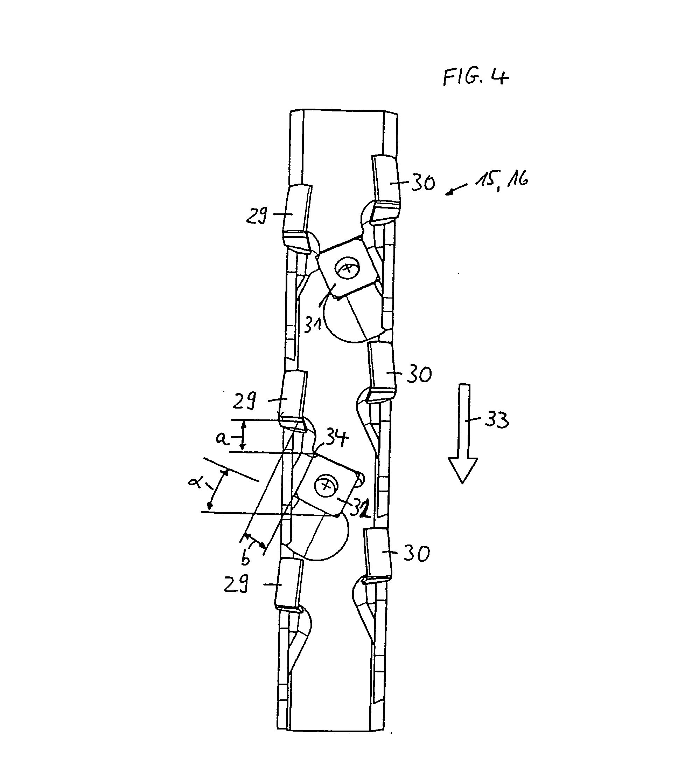

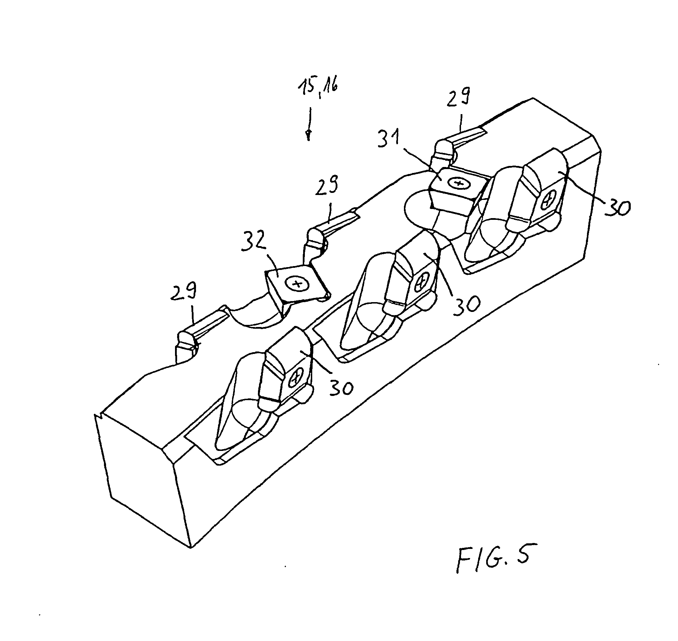

Für die Bearbeitung von zylindrischen Oberflächen ohne Unterstiche wird die Aufgabe ferner durch den Scheibenfräser nach Anspruch 3 gelöst. Im Unterschied zu der vorbeschriebenen Ausführungsform kann auf einen Teil der tangential eingespannten Schneideinsätze entfallen, worauf in der Beschreibung der Fig. 4 und 5 noch eingegangen wird. Hierdurch ergibt sich ein Abstandsmaß der hintersten Schneidecke eines solchen Schneideinsatzes auf einer Geraden, vertikal zur Drehrichtung des Scheibenfräsers, die von der vordersten Schneidkante des darauffolgenden radial eingespannten Schneideinsatzes den Abstand von ≥ 10 mm, vorzugsweise ≥ 5 mm bis hin zu negativen Werten aufweist.

Weiterbildungen der Erfindung sind in den Unteransprüchen 4 bis 6 beschrieben.

So wird vorzugsweise der tangential einspannte Schneideinsatz derart angeordnet, daß der kürzeste Abstand der beim Zerspanen inaktiven Schneidkante oder deren Verlängerung, die der Kante des Scheibenfräserzylinders zugewandt ist, zur nächstliegenden Schneidecke des in Schnittrichtung nachfolgend angeordneten radial eingespannten Schneideinsatzes ≥ 1 mm gewählt. Durch diese Maßnahme ist gewährleistet, daß ein hinreichender Platz für die notwendige Spankammer vor dem radial eingespannten Schneideinsatz verbleibt und dort ablaufende Späne nicht mit der der Spankammer zugewandten inaktiven Schneidkante des tangential eingespannten Schneideinsatzes kollidieren bzw. diese Schneidkante beschädigen können. Dies ist insbesondere für sogenannte Wendeschneidplatten von Bedeutung, die jeweils vier nutzbare Schneidkanten aufweisen. Als bevorzugtes Maß für den axialen Neigungswinkel der tangential eingespannten Schneideinsätze haben sich 25° erwiesen.

Nach einer weiteren Ausgestaltung der Erfindung überlappen sich die Schnittbereiche zweier aufeinanderfolgender tangential eingespannter Schneideinsätze geringfügig.

Mit dem erfindungsgemäßen Scheibenfräser können bei Schnittgeschwindigkeiten von 160 m/min und mehr Spanungsdicken von 0,1 mm bis 0,25 mm abgetragen werden.

Ein Ausführungsbeispiel der Erfindung ist in den Zeichnungen dargestellt. Es zeigen
- Fig. 1: eine schematische Ansicht einer Vorrichtung zur Bearbeitung von Kurbelwellen,
- Fig. 2: eine Draufsicht auf einen Teil des mit Schneideinsätzen bestückten Zylindermantels eines erfindungsgemäßen Scheibenfräsers,
- Fig. 3: eine perspektivische Teilansicht des erfindungsgemäßen Scheibenfräsers nach Fig. 2,
- Fig. 4: eine Draufsicht auf einen Teil des mit Schneideinsätzen bestückten Zylindermantels eines weiteren erfindungsgemäßen Scheibenfräsers und
- Fig. 5: eine perspektivische Teilansicht des Scheibenfräsers nach Fig. 4.

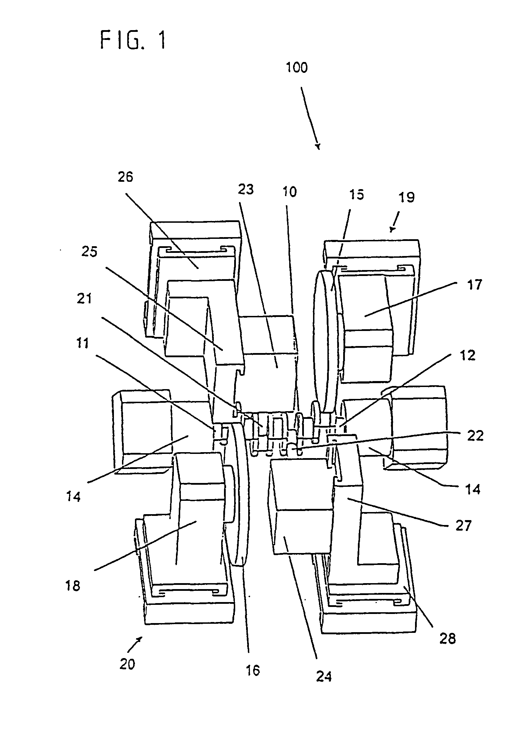

In Fig. 1 ist eine Vorrichtung 100 zur spanenden Bearbeitung einer Kurbelwelle 10 rein schematisch dargestellt. Die Kurbelwelle 10 ist mit ihren Enden 11 und 12 in antreibbaren, drehbaren Einspannfuttern 13, 14 so eingespannt, daß sie um ihre Mittellängsachse drehbar ist. Zur Bearbeitung dienen scheibenförmige Hochgeschwindigkeitswerkzeuge 15, 16, die über entsprechende Antriebe 17, 18 in Drehung versetzt werden können, wobei jeder Antrieb 17, 18 auf einem Support 19, 20 gelagert ist, wodurch das Werkzeug auf einer Achse dem Werkstück nachgeführt wird. Weiterhin sind in der dargestellten Vorrichtung zwei orthogonale Drehfräser 21, 22 angeordnet, die ebenfalls über entsprechende Antriebe 23, 24 drehbar sind. Jeder orthogonale Drehfräser 21, 22 ist auf einem Support mit jeweils zwei Schlitten 25, 26; 27, 28 gelagert, so daß eine Nachführung jedes orthogonalen Drehfräsers 21, 22 auch bei sich drehender Kurbelwelle möglich ist. Mit der dargestellten Vorrichtung ist die gleichzeitige Bearbeitung von vier Hublagerstellen der Kurbelwelle möglich.

Um eine spanende Bearbeitung eines außerhalb des Drehzentrums des Werkstückes 10 exzentrisch angeordneten Kurbelwellenhublagers durchzuführen, wird der Scheibenfräser 15 bzw. 16 um seine Mittelachse mit konstanter oder variabler hoher Drehzahl angetrieben, so daß die auf seinem Außenumfang angeordneten Schneideinsätze mit einer hohen Schnittgeschwindigkeit an der Bearbeitungsstelle des Werkstückes vorbeigeführt werden. Nähere Einzelheiten zur Bearbeitung einer Kurbelwelle sind in der WO 96/39269 beschrieben, auf die verwiesen wird.

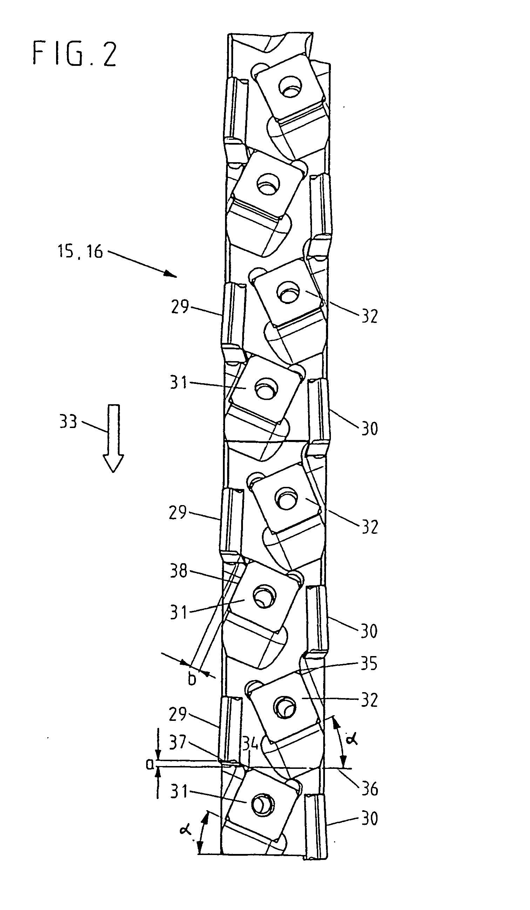

Jeder der Scheibenfräser 15, 16 besitzt an seinem ZylinderAußenmantel eingespannte Schneideinsätze 29 bis 32, wovon die Schneideinsätze 29 und 30 jeweils radial und die Schneideinsätze 31 und 32 jeweils tangential eingespannt sind. Durch Drehung des Scheibenfräsers in Richtung des dargestellten Pfeiles 33 kommen somit bei der vorzugsweise gewählten kleinen Schnittbogenlänge nacheinander die jeweils aktiven Schneidkanten der Schneideinsätze 30, 31, 29 und 32 nacheinander zum Einsatz. Während der axiale Neigungswinkel α = 25° der Schneideinsätze 31 im Uhrzeigersinn gewählt ist, sind die tangential eingespannten Schneideinsätze 32 um den Neigungswinkel α = 25° entgegen dem Uhrzeigersinn gekippt. Hierdurch wird die jeweils hinterste Schneidecke 34 bzw. 35 der Schneideinsätze 31 bzw. 32 nach innen gekippt, wobei das in Fig. 2 dargestellte Maß des Abstandes a, den die Gerade 36, auf der die Schneidecke 34 liegt und die senkrecht zur Schnittrichtung 33 angeordnet ist, von der Schneidkante 37 des nächstfolgenden Schneideinsatzes 29 hart, ≤ 5 mm, vorzugsweise ≤ 2 mm, beträgt. Ggf. kann die dargestellte hintere Schneidecke 34 bzw. 35 räumlich auch "hinter" der Schneidkante des nächstfolgenden radial eingespannten Schneideinsatzes liegen. Der Abstand b der dargestellten (inaktiven) Schneidkante 38 zur nächstliegenden Schneidkante 37 bzw. deren Endpunkt beträgt mindestens 0,5 mm.

Mit den erfindungsgemäßen Scheibenfräser gemäß Fig. 2 ist die gleichzeitige Herstellung zweier Unterstiche durch die Schneideinsätze 29 und 30 und die Ausformung einer Zylindermanteloberfläche durch die Schneideinsätze 31 und 32 möglich. Die Schnittbereiche der beiden versetzt angeordneten Reihen von tangential eingespannten Schneideinsätze 31, 32 überlappen sich geringfügig.

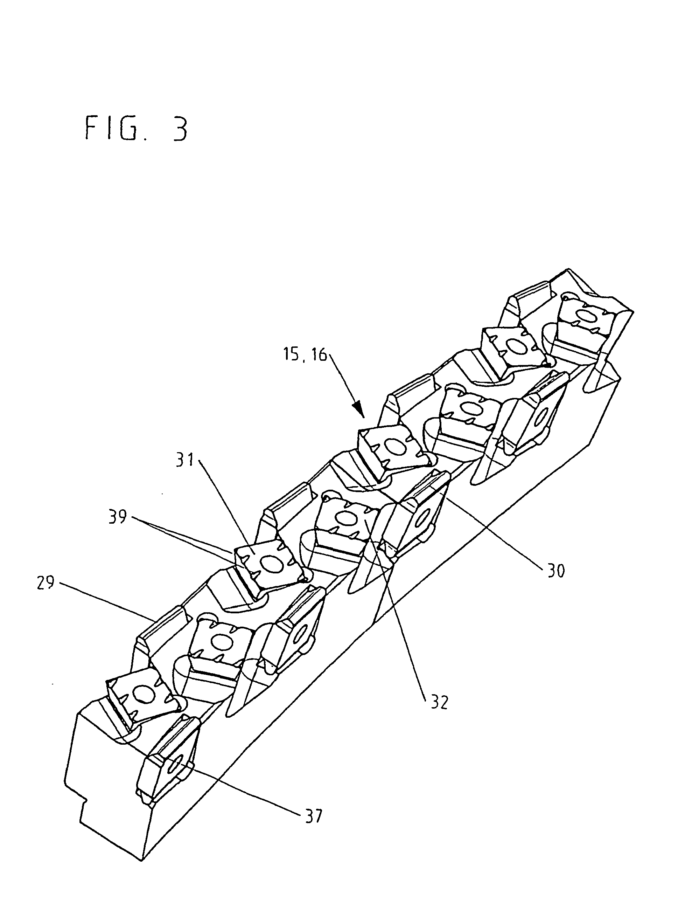

Die aus Fig. 3 ersichtlichen, tangential eingespannten Schneideinsätze 31, 32 weisen zusätzlich noch entlang der jeweils aktiven Schneidkante Einkerbungen 39 auf, die grundsätzlich nach dem Stand der Technik bekannt sind. Diese Einkerbungen bewirken, daß beim Zerspanen statt eines breiteren Spanes entsprechend der Anzahl der Einkerbungen mehrere schmalere Späne erzeugt werden. Im übrigen entsprechen die tangential eingespannten Schneideinsätze den in der WO 96/39269 dargestellten, tangential eingespannten Schneideinsätze. Die radialen Schneideinsätze weisen eine Formgestaltung auf, die den in der DE 197 39 300 A1 beschriebenen entspricht.

In der in Fig. 4 dargestellten Ausführungsform sind die Schneideinsätze 29 und 30 radial eingespannt. Diese Schneideinsätze dienen primär zur Wangenbearbeitung, sind jedoch gegenüber den tangential eingespannten Schneideinsätzen 31 und 32 nicht vorstehend angeordnet, so daß sie in den Randbereich Teile des Zapfenaußendurchmessers schneiden. Im Unterschied zu der in Fig. 2 und 3 dargestellten Ausführungsform sind in jeweils alternierender Folge zwei links und rechts eingespannte radiale Schneideinsätze und nur ein tangential eingespannter Schneideinsatz vorgesehen, wobei die aufeinanderfolgenden tangential eingespannten Schneideinsätze 31 und 32 gegensinnig unter einem axialen Neigungswinkel von vorzugsweise 25 % gekippt sind. Das Abstandsmaß a kann hierdurch bedingt größer gewählt werden und bis zu 10 mm betragen. Entsprechend größer kann auch das Abstandsmaß b im Vergleich zu der in Fig. 2 dargestellten Ausführungsform gewählt werden. Im übrigen sind gleiche Bezugszeichen für gleiche Teile entsprechend Fig. 2 verwendet worden, auf deren Beschreibung verwiesen wird.

Die tangentialen Schneideinsätze 31 und 32 besitzen die in der WO 96/39269 beschriebene Ausgestaltung, weshalb auf die dortige Offenbarung verwiesen wird.

## Patentansprüche

1. Scheibenfräser (15, 16) zur spanenden Bearbeitung von zylindrischen Konturen an einem Werkstück, insbesondere von exzentrisch angeordneten zylindrischen Konturen an einem um eine Längsachse drehbaren Werkstück wie einer Kurbelwelle (10), mit mehreren peripher an einem scheibenförmigen Werkzeugträger unter einem axialen Neigungswinkel (α) gekippt angeordneten Schneideinsätzen (29 bis 32), von denen ein Teil zur Wangen- und/oder Unterstichbearbeitung radial und der andere Teil zur Zapfenaußendurchmesserbearbeitung tangential am Werkzeugträger eingespannt ist,
**dadurch gekennzeichnet,**
**daß** die tangential eingespannten Schneideinsätze (31, 32) unter einem axialen Neigungswinkel (α) von 25° ± 10°, vorzugsweise 20° bis 30°, angeordnet sind und daß deren entgegen der Fräserdrehrichtung (33) betrachtet hinterste Schneidecke (34, 35) auf einer Geraden (36) vertikal zur Drehrichtung des Scheibenfräsers liegt, die von der vordersten Schneidkante (37) des darauffolgenden radial eingespannten Schneideinsatzes (29) einen Abstand (a) von ≤ 5 mm, vorzugsweise ≤ 2 mm, bis hin zu negativen Werten aufweist.

2. Scheibenfräser nach Anspruch 1, **dadurch gekennzeichnet, daß** in Schnittrichtung (33) betrachtet in alternierender Folge auf dem Zylindermantel des Werkzeugträgers jeweils tangential und radial eingespannte Schneideinsätze aufeinanderfolgen.

3. Scheibenfräser (15, 16) zur spanenden Bearbeitung von zylindrischen Konturen an einem Werkstück, insbesondere von exzentrisch angeordneten zylindrischen Konturen an einem um eine Längsachse drehbaren Werkstück wie einer Kurbelwelle (10), mit mehreren peripher an einem scheibenförmigen Werkzeugträger unter einem axialen Neigungswinkel (α) gekippt angeordneten Schneideinsätzen (29 bis 32), von denen ein Teil zur Wangenbearbeitung radial und der andere Teil zur Zapfenaußendurchmesserbearbeitung tangential am Werkzeugträger eingespannt ist, **dadurch gekennzeichnet daß** die tangential eingespannten Schneideinsätze (31, 32) unter einem axialen Neigungswinkel (α) von 25° ± 10°, vorzugsweise 20° bis 30°, angeordnet sind und daß deren entgegen der Fräserdrehrichtung (33) betrachtet hinterste Schneidecke (34, 35) auf einer Geraden (36) vertikal zur Drehrichtung des Scheibenfräsers liegt, die von der vordersten Schneidkante (37) des darauffolgenden radial eingespannten Schneideinsatzes (29) einen Abstand (a) von ≤ 10 mm, vorzugsweise ≤ 5 mm, bis hin zu negativen Werten aufweist.

4. Scheibenfräser nach Anspruch 1, 2 oder 3 **dadurch gekennzeichnet, daß** der kürzeste Abstand (b), der beim Zerspanen inaktiven Schneidkante (38) des tangential eingespannten Schneideinsatzes (31) oder deren Verlängerung, die der Kante des Scheibenfräserzylinders zugewandt ist, zur nächstliegenden Schneidkante (37) des in Schnittrichtung nachfolgend angeordneten radial eingespannten Schneideinsatzes (29) ≥ 0,5 mm ist.

5. Scheibenfräser nach Anspruch 1 oder 2, **dadurch gekennzeichnet, daß** der axiale Neigungswinkel (α) der tangential eingespannten Schneideinsätze (31, 32) 25° beträgt.

6. Scheibenfräser nach einem der Ansprüche 1 bis 4, **dadurch gekennzeichnet, daß** sich die Schnittbereiche zweier aufeinanderfolgender tangential eingespannter Schneideinsätze (31, 32) geringfügig überlappen.

## Claims

1. Side milling cutter (15, 16) for chip removal machining of cylindrical contours on a workpiece, especially eccentrically disposed cylindrical contours on a workpiece rotatable about a longitudinal axis like a crankshaft (10), with a multiplicity of cutting inserts (29 to 32) peripherally arranged on a disk-shaped tool carrier and tilted at an axial inclination angle (α), of which a part of the cutting inserts are radially clamped on the tool carrier for cheek machining and/or undercut machining and the other portion are tangentially clamped on the tool carrier for pin outer diameter machining, **characterized in that** the tangentially clamped cutting inserts (31, 32) are arranged at an axial inclination angle (α) of 25° ± 10°, preferably 20° to 30°, and that their rearmost cutting corners (34, 35) considered with respect to a direction opposite the mill rotation direction (33) lie on a straight line (36) perpendicular to the rotation direction of the side milling cutter and are spaced from the leading cutting edge (37) of the there following radially clamped cutting insert (29) by a distance (a) of ≤ 5 mm, preferably ≤ 2 mm, up to negative values.

2. Side-milling cutter according to claim 1, **characterized in that** considered in the cutting direction (33) there is an alternating sequence of respectively tangentially clamped cutting inserts and radially clamped cutting inserts following one another on the cylindrical periphery of the tool carrier.

3. Side-milling cutter (15, 16) for chip removal machining of cylindrical contours on a workpiece, especially eccentrically arranged cylindrical contours on a workpiece rotatable about a longitudinal axis like a crankshaft (10), with a multiplicity of cutting inserts (29 to 32) arranged on a disk-shaped tool carrier periphery at an axial inclination angle (α), of which a part of the cutting inserts are radially clamped on the tool carrier for cheek machining and another part of the cutting inserts are tangentially clamped on the tool carrier for pin outer diameter machining, **characterized in that** the tangentially clamped cutting inserts (31, 32) are arranged at an axial inclination angle (α) of 25° ± 10°, preferably 20° to 30°, and that their rearmost cutting corners (34, 35) considered in a direction which is opposite the mill rotation direction (33) lie on a straight line (36) perpendicular to the direction of rotation of the milling cutter and which has a spacing from the leading cutting edge (37) of the there following radially clamped cutting insert (29) which is a distance (a) of ≤ 10 mm, preferably ≤ 5 mm, up to negative values.

4. Side-milling cutter according to claim 1, 2 or 3, **characterized in that** the shortest distance (b) between the cutting edge (38) of the tangentially clamped cutting insert (31) which is inactive in machining or its extension, which is turned toward the edge of the side mill cutter cylinder to the next lying cutting edge (37) of the following radially clamped cutting insert (29) in the cutting direction is ≥ 0,5 mm.

5. Side-milling cutter according to claim 1 or 2, **characterized in that** the axial inclination angle (α) of the tangentially clamped cutting inserts (31, 32) amounts to 25°.

6. Side-milling cutter according to one of claims 1 to 4, **characterized in that** the cutting regions of two tangentially clamped cutting inserts (31, 32) following one another slightly overlap.

## Revendications

1. Fraise en disque (15, 16) pour l'usinage à enlèvement de copeaux de contours cylindriques sur une pièce, en particulier de contours cylindriques disposés excentriquement sur une pièce tournant autour d'un axe longitudinal, telle qu'un vilebrequin (10), avec plusieurs plaquettes de coupe (29 à 32) qui sont disposées périphériquement sur un porte-outil en disque de manière à être inclinées sous un angle axial d'inclinaison (α) et dont une partie qui est destinée à l'usinage de flasques et/ou de sous-coupes est serrée radialement sur le porte-outil et l'autre partie qui est destinée à l'usinage de diamètres extérieurs de tourillons est serrée tangentiellement sur ledit porte-outil,
**caractérisée par le fait**
**que** les plaquettes de coupe (31, 32) serrées tangentiellement sont disposées sous un angle axial d'inclinaison (α) de 25° ± 10°, de préférence compris entre 20° et 30°, et que le coin de coupe le plus arrière (34, 35) de celles-ci, vu à l'encontre de la direction de fraisage (33), est situé sur une droite (36) verticale au sens de rotation de la fraise en disque, qui présente une distance (a) de ≤ 5 mm, de préférence de ≤ 2 mm, allant jusqu'à des valeurs négatives, par rapport au tranchant le plus avant (37) de la plaquette de coupe suivante (29) serrée radialement.

2. Fraise en disque selon la revendication 1, **caractérisée par le fait que**, vu dans la direction de coupe (33), des plaquettes de coupe serrées tangentiellement et radialement se succèdent respectivement en succession alternante sur la nappe de cylindre du porte-outil.

3. Fraise en disque (15, 16) pour l'usinage à enlèvement de copeaux de contours cylindriques sur une pièce, en particulier de contours cylindriques disposés excentriquement sur une pièce tournant autour d'un axe longitudinal, telle qu'un vilebrequin (10), avec plusieurs plaquettes de coupe (29 à 32) qui sont disposées périphériquement sur un porte-outil en disque de manière à être inclinées sous un angle axial d'inclinaison (α) et dont une partie qui est destinée à l'usinage de flasques est serrée radialement sur le porte-outil et l'autre partie qui est destinée à l'usinage de diamètres extérieurs de tourillons est serrée tangentiellement sur ledit porte-outil, **caractérisée par le fait que** les plaquettes de coupe (31, 32) serrées tangentiellement sont disposées sous un angle axial d'inclinaison (α) de 25° ± 10°, de préférence compris entre 20° et 30°, et que le coin de coupe le plus arrière (34, 35) de celles-ci, vu à l'encontre de la direction de fraisage (33), est situé sur une droite (36) verticale au sens de rotation de la fraise en disque, qui présente une distance (a) de ≤ 10 mm, de préférence de ≤ 5 mm, allant jusqu'à des valeurs négatives, par rapport au tranchant le plus avant (37) de la plaquette de coupe suivante (29) serrée radialement.

4. Fraise en disque selon la revendication 1, 2 ou 3, **caractérisée par le fait que** la distance la plus courte (b) existant entre le tranchant (38), ou le prolongement de celui-ci, de la plaquette de coupe (31) serrée tangentiellement, qui est inactif lors de l'enlèvement de copeaux et qui montre vers l'arête du cylindre de la fraise en disque, et le tranchant suivant (37) de la plaquette de coupe (29) serrée radialement disposée à la suite dans la direction de coupe est de ≥ 0,5 mm.

5. Fraise en disque selon la revendication 1 ou 2, **caractérisée par le fait que** l'angle axial d'inclinaison (α) des plaquettes de coupe serrées tangentiellement (31, 32) est de 25°.

6. Fraise en disque selon l'une des revendications 1 à 4, **caractérisée par le fait que** les zones de coupe de deux plaquettes de coupe (31, 32) serrées tangentiellement se succédant se recouvrent légèrement.
